# EUROPEAN PATENT APPLICATION

(11) **EP 4 517 546 A1**
(43) Date of publication of application: **05.03.2025**
(21) Application number: 24745336.8
(22) Date of filing: 04.07.2024
(51) Int. Cl.: G06F 16/16

(54) **ELECTRONIC DEVICE FOR MANAGING FILE**

(30) Priority: 13.07.2023 KR 20230091318; 23.08.2023 KR 20230110630
(71) Applicant: Samsung Electronics Co., Ltd, Suwon-si, Gyeonggi-do 16677 (KR)
(72) Inventor: SHIN, Yoonho, Suwon-si, Geonggi-do 16677 (KR); WOO, Hobin, Suwon-si, Geonggi-do 16677 (KR); LEE, Kisung, Suwon-si, Geonggi-do 16677 (KR); JUN, Hyeeun, Suwon-si, Geonggi-do 16677 (KR)
(74) Representative: Appleyard Lees IP LLP
(86) International application number: PCT/KR2024/009496
(87) International publication number: WO 2025/014183

(57) **Abstract**

An electronic device including a processor, a volatile first memory connected to the processor, and a non-volatile second memory connected to the processor is provided. A file manager configured to manage files stored in the second memory may be loaded from the second memory into a first memory area of the first memory and executed by the processor. A second application configured to access the files through a first application and the file manager may be loaded from the second memory into a second memory area of the first memory and executed by the processor. The first memory area may store instructions that may cause, when executed by the processor, the electronic device to, based at least on a request for directory data by the first application, read the directory data from the second memory through the file manager, return the directory data to the first application, and request the second application to store metadata describing files belonging to a directory corresponding to the directory data in the first memory area. The instructions may cause the electronic device to, based on a request for file data by the first application, read the file data from the second memory by using the metadata stored in the first memory and return the file data to the first application.

## Description

### [Technical Field]

Various embodiments of the disclosure relate to an electronic device for managing a file.

### [Background Art]

In electronic devices (e.g., smart phones), a file system can manage files based on a system call of an application. For example, the file system may record data in a non-volatile memory (e.g., solid state drive (SSD)) of the electronic device in response to a write request from an application. In addition, the file system may read data from a memory in response to a read request from an application and provide it to the application.

The above information is presented as background or related art only to assist with an understanding of the disclosure. No determination has been made, and no assertion is made, as to whether any of the above might be applicable as prior art with regard to the disclosure.

### [Disclosure of Invention]

### [Technical Problem]

A volatile memory (e.g., random access memory (RAM)) may include a first memory area allocated to an operating system (e.g., kernel) and a second memory area allocated to an application. The first memory area may be referred to as a kernel space and the second memory area may be referred to as a user space. For example, a first application that calls the file system and a second application (e.g., file system in user space (FUSE) daemon) that supports processing of the call may be loaded from the non-volatile memory into the user space and executed by a processor. The file system may include the second application, a first file manager (e.g., FUSE file system), and a second file manager (e.g., extended file system 4 (EXT4), flash-friendly file system (F2FS)). The first file manager and the second file manager may be loaded from the non-volatile memory into the kernel space and executed by the processor. The second application may receive the system call (e.g., read request) of the first application through the first file manager. The second application may read data (e.g., directory data and/or file data) corresponding to the read request from the non-volatile memory through the second file manager. The second application may provide such data to the first file manager. The first file manager may return the data received from the second application to the first application.

### [Solution to Problem]

According to an embodiment, the file system is capable of processing the system call of the first application without involvement of the second application. According to this processing scheme (a.k.a. "Passthrough read/write"), the second application can determine whether the first application has the authority to access the second file manager without involvement of the second application. For example, if data requested by the first application is created by the first application or if the first application is an application designated to manage the data, the second application can grant the access authority to the first application. Thereafter, the first file manager can process the system call of the first application without involvement of the second application. For example, the first file manager may receive a directory read request from the first application. Then the first file manager can read directory data corresponding to the directory read request from the non-volatile memory through the second file manager and return the directory data to the first application.

In the case where the first application has the authority to access the second file manager, the first file manager can process the directory read request of the first application without involvement of the second application. As such, no involvement of the second application may cause fast response to the directory read request. However, when the first application subsequently requests to read a file, the involvement of the second application is required, and thus a response to the file read request may be relatively slow.

In an embodiment of the disclosure, the electronic device can quickly respond to the file read request from the first application that has the authority to access the second file manager. The technical problems to be solved in the disclosure are not limited to the above-mentioned problems, and other technical problems not mentioned will be clearly apparent to those skilled in the art from the description below.

According to an embodiment, an electronic device may include a processor, a volatile first memory connected to the processor, and a non-volatile second memory connected to the processor. A file manager configured to manage files stored in the second memory may be loaded from the second memory into a first memory area of the first memory and executed by the processor. A second application configured to access the files through a first application and the file manager may be loaded from the second memory into a second memory area of the first memory and executed by the processor. The first memory area may store instructions that may cause, when executed by the processor, the electronic device to, based at least on a request for directory data by the first application, read the directory data from the second memory through the file manager, return the directory data to the first application, and request the second application to store metadata describing files belonging to a directory corresponding to the directory data in the first memory area. The instructions may cause the electronic device to, based on a request for file data by the first application, read the file data from the second memory by using the metadata stored in the first memory and return the file data to the first application.

According to an embodiment, an electronic device may include a processor, a volatile first memory connected to the processor, and a non-volatile second memory connected to the processor. A first file manager and a second file manager may be loaded from the second memory into a first memory area of the first memory and executed by the processor. An application may be loaded from the second memory into a second memory area of the first memory and executed by the processor. The second memory area may store instructions that may cause, when executed by the processor, the electronic device to receive a request message requesting metadata describing files from the first file manager. The instructions may cause the electronic device to deliver the request message to the second file manager so that metadata stored in the second memory is loaded into the first memory area of the first memory.

According to an embodiment, a method for operating an electronic device may include, based at least on a request for directory data by a first application, reading the directory data from a non-volatile memory of the electronic device through a file manager, returning the directory data to the first application, and requesting a second application to store metadata describing files belonging to a directory corresponding to the directory data in a volatile memory. The method may include, based on a request for file data by the first application, reading the file data from the non-volatile memory by using the metadata stored in the volatile memory and returning the file data to the first application.

According to an embodiment, there is provided a recording medium storing instructions readable by a processor of an electronic device. The instructions, when executed by the processor, may cause the electronic device to, based at least on a request for directory data by a first application, read the directory data from a non-volatile memory of the electronic device through a file manager, return the directory data to the first application, and request a second application to store metadata describing files belonging to a directory corresponding to the directory data in a volatile memory. The instructions, when executed by the processor, may cause the electronic device to, based on a request for file data by the first application, read the file data from the non-volatile memory by using the metadata stored in the volatile memory and returning the file data to the first application.

### [Advantageous Effects of invention]

According to an embodiment of the disclosure, the electronic device can quickly respond to a read request from an application. In addition, various effects explicitly or implicitly appreciated through the disclosure may be provided.

### [Brief Description of Drawings]

FIG. 1 is a block diagram of an electronic device in a network environment, according to various embodiments.
FIG. 2 is a block diagram of an electronic device for managing files, according to an embodiment.
FIGS. 3A and 3B are diagrams illustrating operations of a file system for returning data to a first application in response to a read request of the first application, according to an embodiment.
FIGS. 4A and 4B are diagrams illustrating operations of a file system for returning data to a first application in response to a read request of the first application, according to an embodiment.
FIG. 5 is a flowchart illustrating operations of an electronic device when a first file manager is executed in a first memory area, according to an embodiment.
FIG. 6 is a flowchart illustrating operations of an electronic device when a first file manager is executed in a first memory area, according to one embodiment.
FIG. 7 is a flowchart illustrating operations of an electronic device when a first file manager is executed in a first memory area, according to an embodiment.
FIG. 8 is a flowchart illustrating operations of an electronic device when a first file manager is executed in a first memory area, according to one embodiment.
FIG. 9 is a flowchart illustrating operations of an electronic device when a second application is executed in a second memory area, according to an embodiment.

Hereinafter, embodiments of the disclosure will be described in detail with reference to the drawings so that those skilled in the art can easily practice the embodiments. However, the disclosure may be implemented in many different forms and is not limited to the embodiments described herein. In the drawings, identical or similar reference numerals may be used for identical or similar components. Also, in the drawings and related descriptions, descriptions of well-known functions and components may be omitted for clarity and brevity.

### [Mode for the Invention]

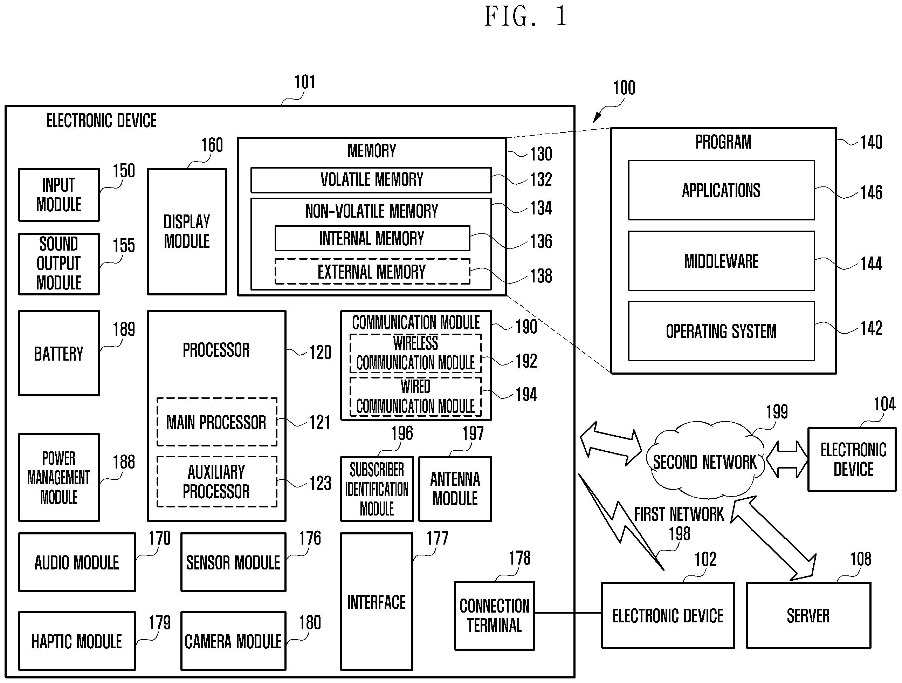

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

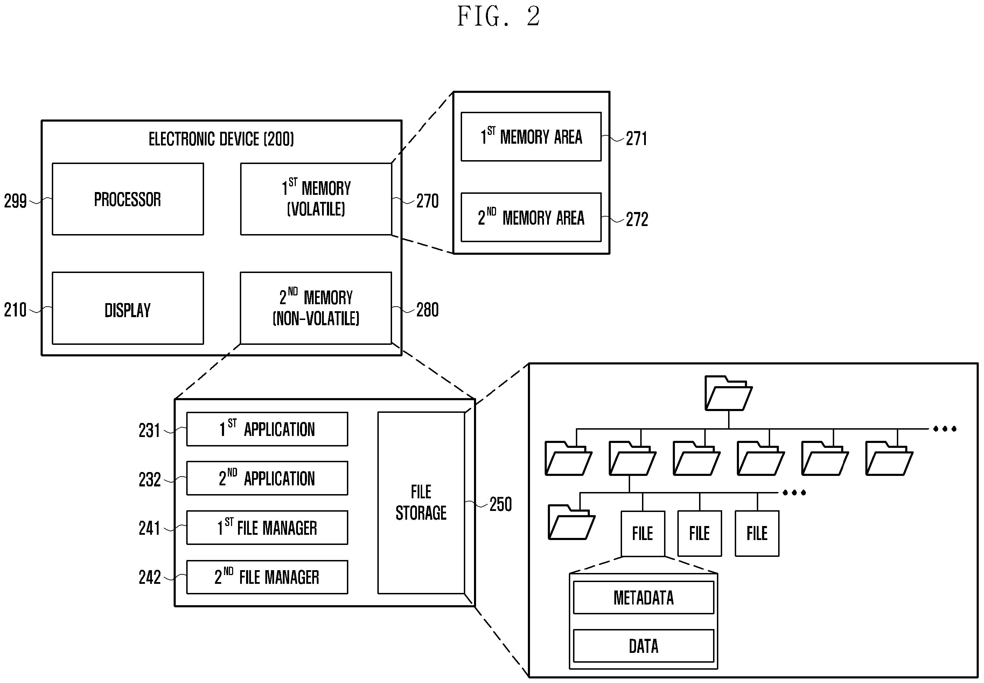

FIG. 2 is a block diagram of an electronic device 200 for managing files, according to an embodiment. With referent to FIG. 2, the electronic device 200 may include a touch-sensitive display 210, a volatile first memory 270, a non-volatile second memory 280, and a processor 299. According to embodiments, these components of the electronic device 200 may be operatively, functionally, and/or electrically connected to each other. The display 210, the first memory 270, the second memory 280, and the processor 299 may be implemented substantially the same as the display module 160, the volatile memory 132, the non-volatile memory 134, and the processor 120 shown in FIG. 1, respectively, to perform substantially the same function.

According to an embodiment, the first memory 270 may include a first memory area (i.e., a kernel space) 271 allocated as storage for executing an operating system (e.g., kernel), and a second memory area (i.e., a user space) 272 allocated as storage for executing an application. The second memory 280 may store a first application 231, a second application 232, a first file manager 241, a second file manager 242, and a file storage 250.

According to an embodiment, a program (e.g., the program 140 in FIG. 1) may be stored as instructions in the second memory 280. The program may be loaded into the first memory area 271 and/or the second memory area 272 of the first memory 270 and executed by the processor 299.

According to an embodiment, the first application 231 and the second application (e.g., file system in user space (FUSE) daemon) 232 may be loaded into the second memory area 272 from the second memory 280 and executed by the processor 299. The first application 231, when executed in the second memory area 272 by the processor 299, may provide an execution screen for interaction with the user. The first application 231 may receive a user input through the execution screen and call the file system based on the user input. The execution screen of the first application 231 is displayed on the display 210, and thus the first application 231 may be classified as a foreground process (or top-layer process, non-background process). The second application 232, when executed in the second memory area 272 by the processor 299, may support processing for the system call. For example, the second application 232 may include a FUSE daemon. The second application 232 may be classified as a background process that supports the execution of the first application 231 without direct interaction with the user.

According to an embodiment, the file system may include at least one of the second application 232, the first file manager (e.g., FUSE kernel) 241, and the second file manager (e.g., extended file system 4 (EXT4) or flash-friendly file system (F2FS) 242. The first file manager 241 or the second file manager 242 may be loaded into the first memory area 271 from the second memory 280 and executed by the processor 299. The first file manager 241 and the second file manager 242 may be classified as background processes.

According to an embodiment, the first application 231, when executed in the second memory area 272 by the processor 299, may call the first file manager 241 executed in the first memory area 271 to read data (e.g., data of a directory and/or data of a file) stored in the second memory 280. The second application 232, when executed in the second memory area 272 by the processor 299, may receive a read request of the first application 231 through the first file manager 241 and deliver it to the second file manager 242 executed in the first memory area 271. The second file manager 242, when executed in the first memory area 271 by the process 299, may receive the read request from the second application 232 executed in the second memory area 272. The second file manager 242 may find data (e.g., data of a directory and/or data of a file) corresponding to the read request in the file storage 250 and provide it to the second application 232. Files stored in the file storage 250 may be managed by directory by the second file manager 242. The file may include data of the file and metadata that describes the data of the file. For example, in the structure of the EXT4 file system, metadata may be referred to as an inode. The metadata may include information about a physical address indicating the location where the file is stored in the second memory 280, a file size, an owner name, a file created date, and a file modified date. The first file manager 241 may receive the data found by the second file manager 242 through the second application 232. The first file manager 241 may return the received data to the first application 231.

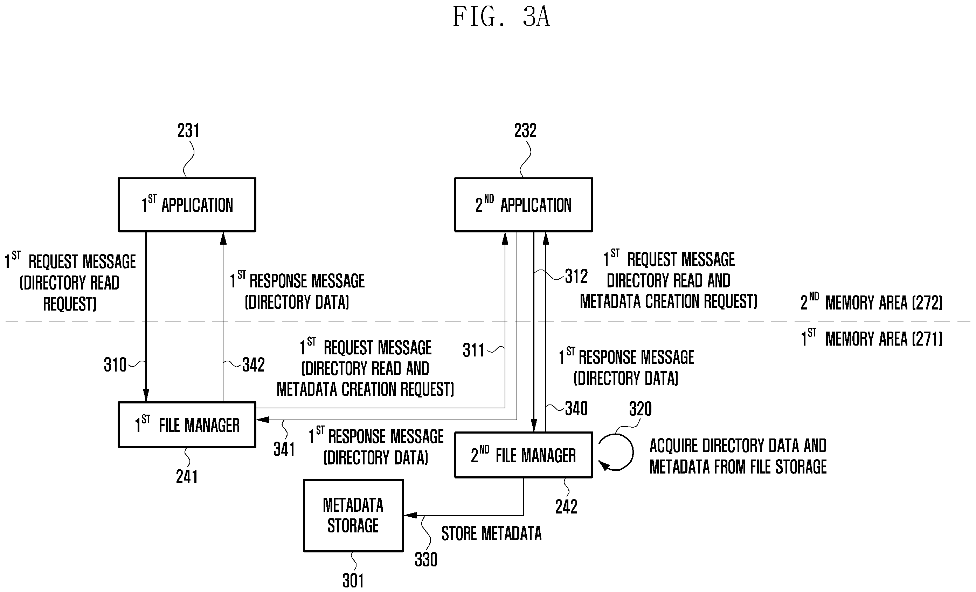

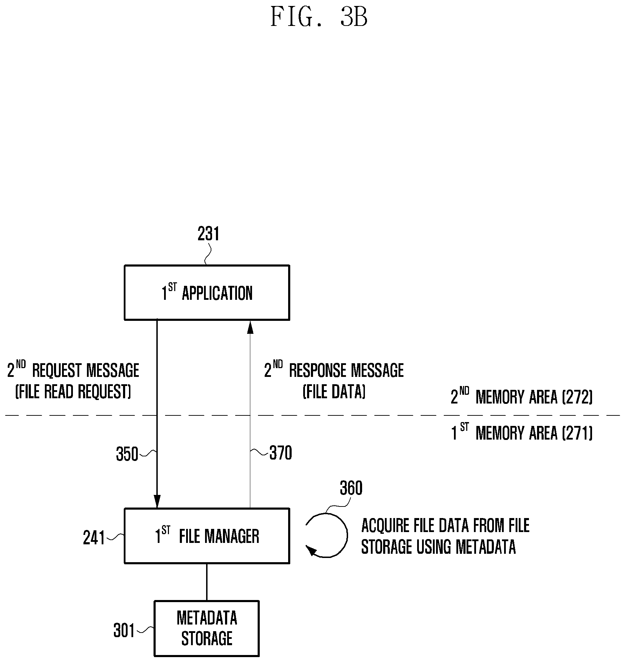

FIGS. 3A and 3B are diagrams illustrating operations of a file system for returning data to a first application 231 in response to a read request of the first application 231, according to an embodiment. The first application 231 and the second application 232 may be loaded into the second memory area 272 and executed by the processor 299, and the first file manager 241 and the second file manager 242 may be loaded into the first memory area 271 and executed by the processor 299.

With reference to FIG. 3A, at operation 310, the first application 231 may deliver (i.e., output), to the first file manager 241, a first request message that requests reading data of a directory (e.g., the name of the directory, the names of files belonging to the directory) from the file storage 250 and then returning it. At operation 311, the first file manager 241 may deliver the first request message to the second application 232. Additionally, the first file manager 241 may insert a request to create (e.g., load) metadata (e.g., metadata of each file) corresponding to the directory data read-requested by the first application 231 in the first memory area 271 into the first request message, and deliver it to the second application 232. At operation 312, the second application 232 may deliver the first request message to the second file manager 242. At operation 320, the second file manager 242 may obtain the directory data and metadata from the file storage 250 in response to the first request message. For example, assuming that directories A, B, and C exist in the file storage 250 (see FIG. 2) and directories a, b, and c exist as subdirectories of the respective directories, the second file manager 242 may obtain, as directory data, the names of files belonging to the respective directories A, B, C, a, b, and c from the file storage 250. The second file manager 242 may obtain metadata of each file from the file storage 250. At operation 330, the second file manager 242 may store the obtained metadata in the metadata storage 301. At operation 340, the second file manager 242 may deliver a first response message containing the obtained directory data to the second application 232. At operation 341, the second application 232 may deliver the first response message to the first file manager 241. At operation 342, the first file manager 241 may deliver the first response message to the first application 231. The first application 231 may construct a file list using the directory data contained in the first response message. The processor 299 may insert the constructed file list in the execution screen and display it on the display 210.

With reference to FIG. 3B, at operation 350, the first application 231 may deliver, to the first file manager 241, a second request message that requests reading data of a file from the file storage 250 (see FIG. 2) and then returning it. For example, the first application 231 may identify a user's selection (e.g., touch input) for a certain file (e.g., an image file, a video file, an audio file, or a document file) in the file list through the display 210. The first application 231 may deliver the second request message requesting data of the selected file to the first file manager 241. At operation 360, in response to the second request message, the first file manager 241 may obtain the file data requested by the first application 231 from the file storage 301 by using the metadata rather than delivering the second request message to the second application 232. For example, the first file manager 241 may identify the physical address, where the data of the selected file is stored, in the metadata storage 301 and obtain the data from the file storage 250 by accessing the identified address. At operation 370, the first file manager 241 may deliver a second response message containing the obtained file data to the first application 231. The first application 231 may support to provide the received file data to the user through the display 210 and/or the audio device (e.g., the audio module 170 in FIG. 1 or an external audio device connected wirelessly or wired to the electronic device 200 via a communication circuit (e.g., the communication module 190 in FIG. 1)). For example, the first application 231 may create a list of applications (e.g., a list of image viewer programs if the file is an image file) capable of executing file data. The processor 299 may display the application list on the display 210. The processor 299 may execute the file data by using an application selected by the user from the application list. For example, if the file data is an image file, the processor 299 may execute the selected image viewer and display an image on the display 210. If the file data is an audio file, the processor 299 may execute the selected audio player to allow the audio file to be played through the audio device. In another example, a pre-designated application for each type of file data may be automatically executed without displaying the application list.

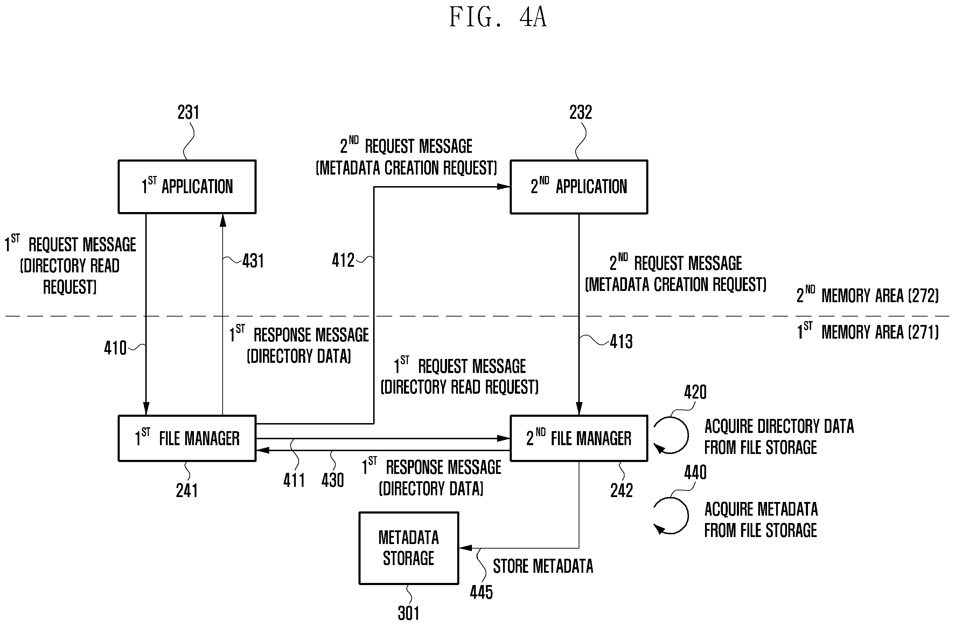

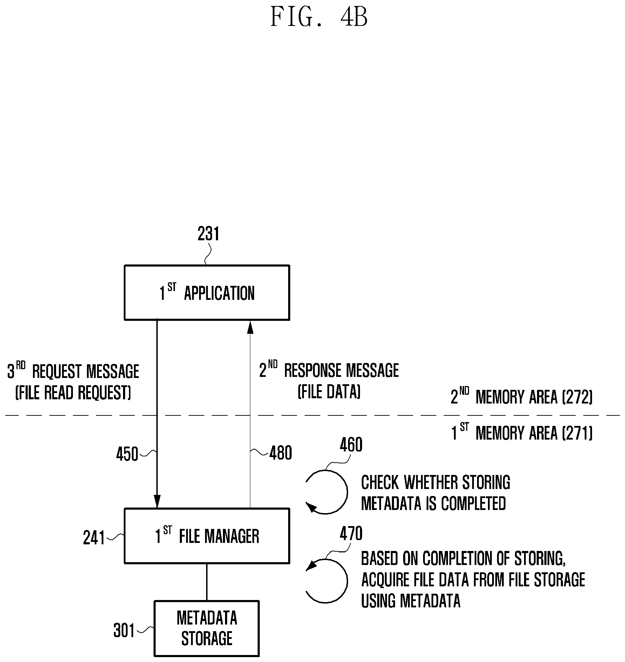

FIGS. 4A and 4B are diagrams illustrating operations of a file system for returning data to a first application 231 in response to a read request of the first application 231, according to an embodiment. The first application 231 and the second application 232 may be loaded into the second memory area 272 and executed by the processor 299, and the first file manager 241 and the second file manager 242 may be loaded into the first memory area 271 and executed by the processor 299.

With reference to FIG. 4A, at operation 410, the first application 231 may deliver, to the first file manager 241, a first request message that requests reading data of a directory (e.g., the names of files belonging to the directory) from the file storage 250 (see FIG. 2) and then returning it. At operation 411, the first file manager 241 may deliver the first request message to the second file manager 242 instead of delivering it to the second application 232 (see FIG. 3A). For example, the first application 231 may be a management application designated to write and read data to and from the file storage 250. The first application 231 may be an application (e.g., a camera application, a document editing program) that has generated data stored in the file storage 250, or an application (e.g., a photo viewer program, a music player, video player) that provides data stored in the file storage 250 to the user. The second application 232 may grant the authority to directly request a read from the second file manager 242, to a management application and a source application. The first file manager 241 may confirm through the second application 232 that this authority has been granted to the first application 231, and deliver the first request message to the second file manager 242. At operation 412, based on the first request message being output to the second file manager 242 rather than the second application 232, the first file manager 241 may deliver a second request message that requests to create (e.g., load) metadata (e.g., metadata of each file) corresponding to the directory data read-requested by the first application 231 in the first memory area 271 to the second application 232. At operation 413, the second application 232 may deliver the second request message to the second file manager 242. At operation 420, in response to the first request message, the second file manager 242 may obtain directory data from the file storage 250. At operation 430, the second file manager 242 may deliver a first response message containing the obtained directory data to the first file manager 241. At operation 431, the first file manager 241 may deliver the first response message to the first application 231. The first application 231 may construct a file list using the directory data contained in the first response message. The processor 299 may insert the file list in the execution screen and display it on the display 210. At operation 440, in response to the second request message, the second file manager 242 may obtain metadata of each file from the file storage 250. At operation 445, the second file manager 242 may store the obtained metadata in the metadata storage 301.

With reference to FIG. 4B, at operation 450, the first application 231 may deliver, to the first file manager 241, a third request message that requests reading data of a file from the file storage 250 and then returning it. For example, the first application 231 may identify a user's selection (e.g., touch input) for a certain file (e.g., an image file, a video file, an audio file, or a document file) in the file list through the display 210, and deliver the third request message requesting data of the selected file to the first file manager 241. At operation 460, the first file manager 241 may check whether storing metadata (operation 445, see FIG. 4A) is completed. For example, the first file manager 241 may record identification information of the first application 231 requesting a file read in a table. The second file manager 242 may delete the identification information of the first application 231 from the table when storing metadata (operation 445) is completed. Based on the deletion of the identification information from the table, the first file manager 241 may determine that storing metadata (operation 445) is completed. At operation 470, based on the completion of storing metadata (operation 445), the first file manager 241 may identify the physical address, where the data of the selected file is stored, in the metadata storage 301 and obtain the data from the file storage 250 by accessing the identified address. In the case where the identification information exists in the table (i.e., storing metadata (operation 445) is in progress), the first file manager 241 may wait until storing metadata (operation 445) is completed, without sending the third request message to the second application 232. If the first file manager 241 delivers (a.k.a. lookup request) the third request message to the second application 232 without wait, the second application 232 should simultaneously process the first requested metadata creation and the next requested file read, and thus a response (e.g., an operation of returning directory data and file data to the first application 231) to a request may be delayed. For example, to process the metadata creation request and the file read request, the second application 232 may acquire a lock to use a system resource (e.g., the processor 299) in the electronic device 200. An operation of acquiring a lock to create metadata and an operation of acquiring a lock to read a file may conflict with each other, and thus the waiting time to acquire such locks becomes longer, which may result in a delayed response. For example, displaying the file list may be delayed. Furthermore, the first application 231 that requested the file data may be forcibly terminated. If the first file manager 241 performs an operation (operation 470) to obtain the file data using the metadata after storing metadata (operation 445) is completed, collisions can be avoided and response can be relatively fast. At operation 480, the first file manager 241 may deliver a second response message containing the obtained file data to the first application 231. The first application 231 may support to provide the received file data to the user through the display 210 and/or the audio device (e.g., the audio module 170 in FIG. 1 or an external audio device connected wirelessly or wired to the electronic device 200 via a communication circuit (e.g., the communication module 190 in FIG. 1)). For example, the first application 231 may create a list of applications (e.g., a list of image viewer programs if the file is an image file) capable of executing file data. The processor 299 may display the application list on the display 210. The processor 299 may execute the file data by using an application selected by the user from the application list. For example, if the file data is an image file, the processor 299 may execute the selected image viewer and display an image on the display 210. If the file data is an audio file, the processor 299 may execute the selected audio player to allow the audio file to be played through the audio device. In another example, a pre-designated application for each type of file data may be automatically executed without displaying the application list.

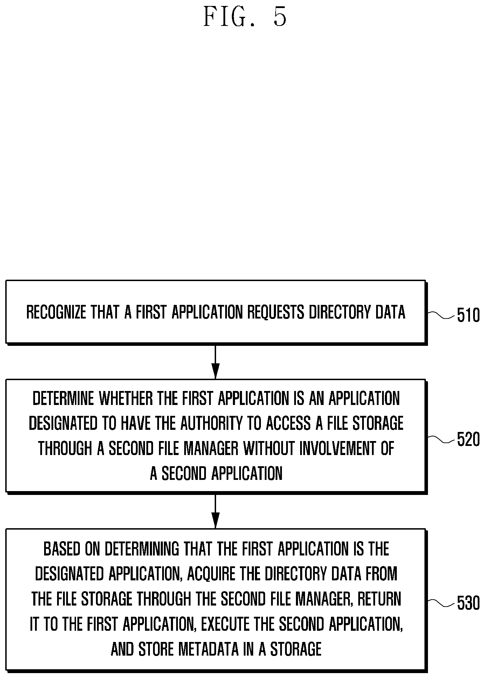

FIG. 5 is a flowchart illustrating operations performed by an electronic device 200 when a first file manager 241 is executed in a first memory area 271, according to an embodiment.

At operation 510, the electronic device 200 may recognize that the first application 231 requests directory data. For example, the processor 299 may recognize that the first application 231 calls the first file manager 241 to obtain directory data.

At operation 520, the electronic device 200 may determine whether the first application 231 is an application (e.g., a file management application) designated to have the authority to access the file storage 250 (see FIG. 2) through the second file manager 242 without the involvement of the second application 232. For example, the processor 299 may identify the authority of the first application 231 through the second application 232. Information indicating whether the first application 231 is a designated application may be stored in a database (e.g., the second memory 280). Based on the first application 231's request for a directory read, the second application 232 may access the database and identify whether the first application 231 is a file management application. As described above with reference to FIG. 4A, the authority given to the file management application may be to access the file storage 250 through the second file manager 242 rather than through the second application 232. Upon identifying that the first application 231 is the file management application, the second application 232 may allow the first application 231 to access the file storage 250 through the second file manager 242 without the involvement of the second application 232.

At operation 530, based on determining that the first application 231 is the designated application, the electronic device 200 (e.g., the processor 299) may perform an operation of acquiring the directory data requested by the first application 231 from the file storage 250 through the second file manager 242 without the involvement of the second application 232 and returning it to the first application 231. Additionally, the electronic device 200 (e.g., the processor 299) may perform an operation (e.g., operation 445) of executing the second application 232 and storing metadata in the metadata storage 301.

If it is determined at operation 520 that the first application 231 is not the designated application, the electronic device 200 may acquire the directory data from the file storage 250 through the second application 232. For example, the processor 299 may perform an operation of requesting the directory data from the second application 232 and returning the directory data received from the second application 232 to the first application 231.

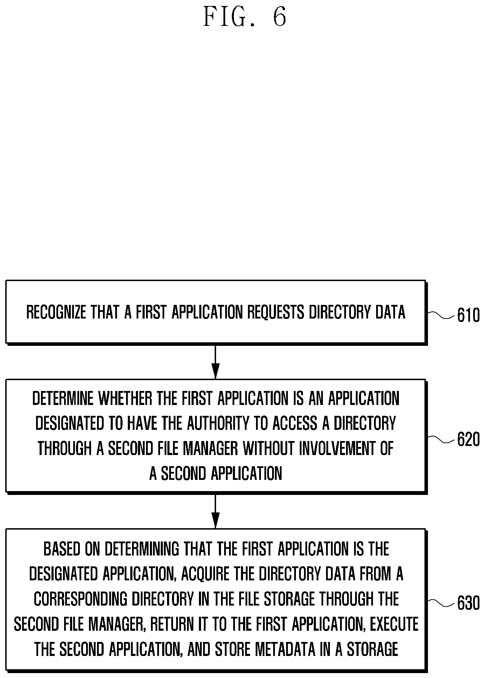

FIG. 6 is a flowchart illustrating operations performed by an electronic device 200 when a first file manager 241 is executed in a first memory area 271, according to one embodiment.

At operation 610, the electronic device 200 may recognize that the first application 231 requests directory data. For example, the processor 299 may recognize that the first application 231 calls the first file manager 241 to obtain directory data.

At operation 620, the electronic device 200 may determine whether the first application 231 is an application (e.g., an application involved in the creation of files in the directory) designated to have the authority to access a directory corresponding to the directory data requested by the first application 231 through the second file manager 242 without the involvement of the second application 232. For example, in the case where the first application 231 is a camera application and the corresponding directory is an image directory, the processor 299 may allow the first application 231 to access the image directory through the second file manager 242 without the involvement of the second application 232.

At operation 630, based on determining that the first application 231 is the designated application, the electronic device 200 (e.g., the processor 299) may perform an operation of acquiring the directory data requested by the first application 231 from the corresponding directory in the file storage 250 through the second file manager 242 and returning it to the first application 231. Additionally, the electronic device 200 may perform an operation (e.g., operation 445) of executing the second application 232 and storing metadata in the metadata storage 301.

If it is determined at operation 620 that the first application 231 is not the designated application, the electronic device 200 may acquire the directory data from the file storage 250 through the second application 232. For example, the processor 299 may perform an operation of requesting the directory data from the second application 232 and returning the directory data received from the second application 232 to the first application 231.

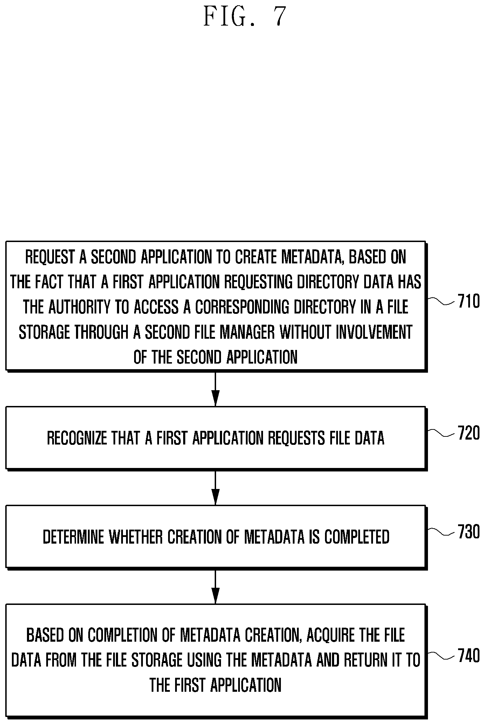

FIG. 7 is a flowchart illustrating operations performed by an electronic device 200 when a first file manager 241 is executed in a first memory area 271, according to an embodiment.

At operation 710, the electronic device 200 (e.g., the processor 299) may perform an operation (e.g., operation 412) of requesting the second application 232 to create metadata, based on the fact that the first application 231 requesting directory data has the authority to access a corresponding directory in the file storage through the second file manager 242 without the involvement of the second application 232.

After requesting the second application 232 to generate metadata, at operation 720, the electronic device 200 may recognize that the first application 231 requests file data (e.g., operation 450). For example, the processor 299 may recognize that the first application 231 calls the first file manager 241 to obtain file data.

At operation 730, the electronic device 200 may determine whether the creation of metadata is completed. For example, the processor 299 may record identification information of the first application 231 requesting a file read in a table. When storing metadata (operation 445) is completed, the processor 299 may delete the identification information of the first application 231 from the table. Based on the deletion of the identification information from the table, the processor 299 may determine that storing metadata (operation 445) is completed.

At operation 740, based on the completion of metadata creation, the electronic device 200 (e.g., the processor 299) may acquire the file data from the file storage 250 using the metadata and return it to the first application.

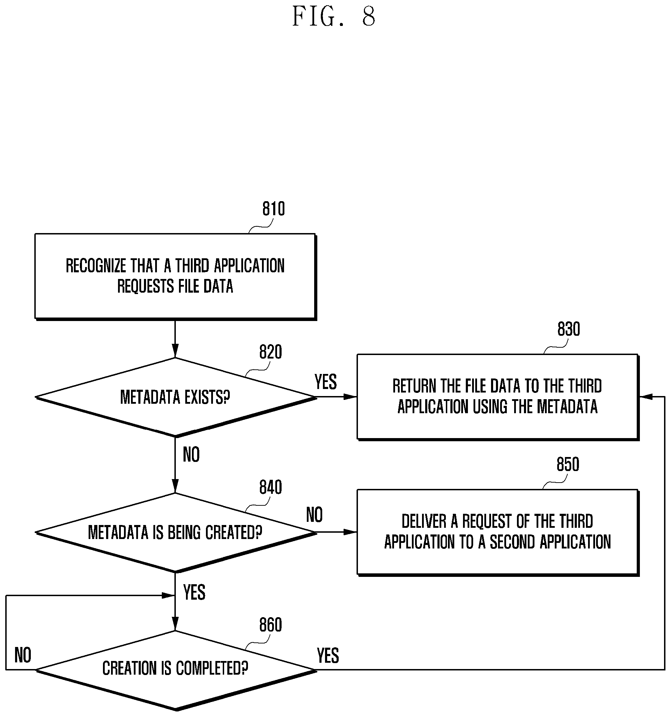

FIG. 8 is a flowchart illustrating operations performed by an electronic device 200 when a first file manager 241 is executed in a first memory area 271, according to one embodiment.

At operation 810, the electronic device 200 may recognize that the third application requests file data. For example, the processor 299 may recognize that the third application calls the first file manager 241 to obtain file data.

At operation 820, the electronic device 200 (e.g., the processor 299) may determine whether metadata corresponding to the requested file data exists in the metadata storage 301. If metadata exists in the metadata storage 301, the electronic device 200 may return the file data to the third application by using the metadata at operation 830.

If it is determined at operation 820 that metadata does not exist in the metadata storage 301, the electronic device 200 (e.g., the processor 299) may determine at operation 840 whether metadata corresponding to the requested file data is being created (e.g., operation 330 or operation 445). If metadata is not being created, the electronic device 200 may deliver the request of the third application to the second application 232 at operation 850. Then, the second application 232 may access the file storage 250 through the second file manager 242 and acquire the file data. The electronic device 200 may return the acquired file data to the third application.

If it is determined at operation 840 that metadata is being created, the electronic device 200 (e.g., the processor 299) may wait for the creation of metadata to be completed without responding to the request of the third application at operation 860. When the creation of metadata is completed, the electronic device 200 may perform operation 830.

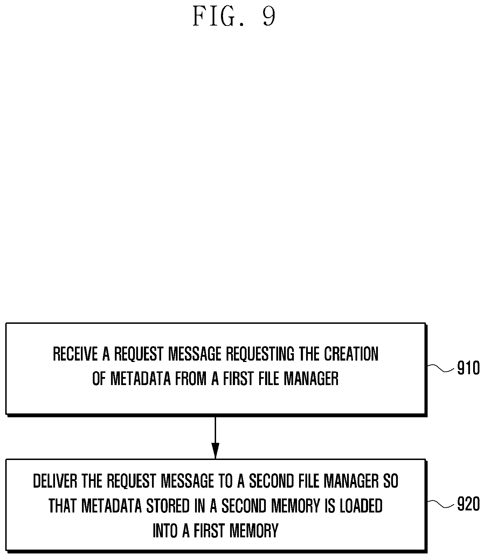

FIG. 9 is a flowchart illustrating operations performed by an electronic device 200 when a second application 232 is executed in a second memory area 272, according to an embodiment.

At operation 910, the electronic device 200 may perform an operation of receiving a request message (e.g., the first request message in FIG. 3A or the second request message in FIG. 4A) requesting the creation of metadata from the first file manager 241. For example, the processor 299 may recognize that the request message is delivered from the first file manager 241 to the second application 232.

At operation 920, the electronic device 200 may perform an operation of delivering the request message to the second file manager 242 so that metadata stored in the file storage 250 of the second memory 280 is loaded into the first memory area 271 of the first memory 270. For example, the processor 299 may recognize that the request message is delivered from the second application 232 to the second file manager 242.

In the above description related to FIGS. 1 to 9, the prefixes "first" and "second" are only used to distinguish the same name and do not have any special meaning such as importance or order.

According to an embodiment, an electronic device may include a processor, a volatile first memory connected to the processor, and a non-volatile second memory connected to the processor. A file manager (e.g., the second file manager 242 in FIG. 2) configured to manage files stored in the second memory may be loaded from the second memory into a first memory area of the first memory and executed by the processor. A second application configured to access the files through a first application and the file manager may be loaded from the second memory into a second memory area of the first memory and executed by the processor. The first memory area may store instructions that may cause, when executed by the processor, the electronic device to, based at least on a request for directory data by the first application, read the directory data from the second memory through the file manager, return the directory data to the first application, and request the second application to store metadata describing files belonging to a directory corresponding to the directory data in the first memory area. The instructions may cause the electronic device to, based on a request for file data by the first application, read the file data from the second memory by using the metadata stored in the first memory and return the file data to the first application.

The instructions may cause the electronic device to read the directory data from the second memory through the file manager without involvement of the second application.

The instructions may cause the electronic device to receive a read request for a file corresponding to the metadata from the first application or the third application, and based on completion of storing the metadata in the first memory area, read file data corresponding to the read request through the metadata and return the file data to the first application.

The instructions may cause the electronic device to record identification information of an application sending the read request for the file corresponding to the metadata in a table, and delete the identification information from the table when storing the metadata is completed.

The instructions may cause the electronic device to, further based on the first application being an application designated to have authority to access a file storage of the second memory through the file manager without involvement of the second application, request the second application to store the metadata in the first memory area. The designated application may include at least one of an application configured to manage the file storage or an application involved in creation of files in the directory.

The instructions may cause the electronic device to return names of files belonging to the directory as the directory data to the first application.

The file manager may include an extended file system 4 (EXT4), a flash-friendly file system (F2FS), or a filesystem in user space (FUSE) kernel.

The metadata stored in the first memory area may include information indicating a physical address where a file is stored in the second memory.

According to an embodiment, an electronic device may include a processor, a volatile first memory connected to the processor, and a non-volatile second memory connected to the processor. A first file manager and a second file manager may be loaded from the second memory into a first memory area of the first memory and executed by the processor. An application (e.g., the second application 232 in FIG. 2) may be loaded from the second memory into a second memory area of the first memory and executed by the processor. The second memory area may store instructions that may cause, when executed by the processor, the electronic device to receive a request message requesting metadata describing files from the first file manager. The instructions may cause the electronic device to deliver the request message to the second file manager so that metadata stored in the second memory is loaded into the first memory area of the first memory.

The metadata loaded into the first memory area of the first memory may include information indicating a physical address where a file is stored in the second memory.

According to an embodiment, a method for operating an electronic device may include, based at least on a request for directory data by a first application, reading the directory data from a non-volatile memory of the electronic device through a file manager (e.g., the second file manager 242 in FIG. 2), returning the directory data to the first application, and requesting a second application to store metadata describing files belonging to a directory corresponding to the directory data in a volatile memory. The method may include, based on a request for file data by the first application, reading the file data from the non-volatile memory by using the metadata stored in the volatile memory and returning the file data to the first application.

In the method, returning the file data may include, further based on completion of storing the metadata in the volatile memory, reading the file data from the non-volatile memory by using the metadata stored in the volatile memory and returning the file data to the first application.

In the method, requesting the second application may include, further based on the first application being an application designated to have authority to access a file storage of the non-volatile memory through the file manager without involvement of the second application, requesting the second application to store the metadata in the volatile memory. The designated application may include an application configured to manage the file storage and an application involved in creation of files in the directory.

In the method, returning the directory data may include returning names of files belonging to the directory to the first application.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

According to an embodiment, there is provided a recording medium storing instructions readable by a processor of an electronic device. The instructions, when executed by the processor, may cause the electronic device to, based at least on a request for directory data by a first application, read the directory data from a non-volatile memory of the electronic device through a file manager(e.g., the second file manager 242 of Fig. 2), return the directory data to the first application, and request a second application to store metadata describing files belonging to a directory corresponding to the directory data in a volatile memory. The instructions, when executed by the processor, may cause the electronic device to, based on a request for file data by the first application, read the file data from the non-volatile memory by using the metadata stored in the volatile memory and returning the file data to the first application.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor;
a volatile first memory connected to the processor; and
a non-volatile second memory connected to the processor,
wherein a file manager configured to manage files stored in the second memory is loadable from the second memory into a first memory area of the first memory and executed by the processor,
a second application configured to access the files through a first application and the file manager is loaded from the second memory into a second memory area of the first memory and executed by the processor, and
the first memory area stores instructions that cause, when executed by the processor, the electronic device to:
based at least on a request for directory data by the first application, read the directory data from the second memory through the file manager, return the directory data to the first application, and request the second application to store metadata describing files belonging to a directory corresponding to the directory data in the first memory area, and
based on a request for file data by the first application, read the file data from the second memory by using the metadata stored in the first memory and return the file data to the first application.

2. The electronic device of claim 1, wherein the instructions cause the electronic device to:
read the directory data from the second memory through the file manager without involvement of the second application.

3. The electronic device of claim 1, wherein the instructions cause the electronic device to:
receive a read request for a file corresponding to the metadata from the first application or the third application, and
based on completion of storing the metadata in the first memory area, read file data corresponding to the read request through the metadata and return the file data to the first application.

4. The electronic device of claim 3, wherein the instructions cause the electronic device to:
record identification information of an application sending the read request for the file corresponding to the metadata in a table, and delete the identification information from the table when storing the metadata is completed.

5. The electronic device of claim 1, wherein the instructions cause the electronic device to:
further based on the first application being an application designated to have authority to access a file storage of the second memory through the file manager without involvement of the second application, request the second application to store the metadata in the first memory area.

6. The electronic device of claim 5, wherein the designated application includes at least one of an application configured to manage the file storage or an application involved in creation of files in the directory.

7. The electronic device of claim 1, wherein the instructions cause the electronic device to:
return names of files belonging to the directory as the directory data to the first application.

8. The electronic device of claim 1, wherein the file manager includes an extended file system 4 (EXT4), a flash-friendly file system (F2FS), or a file system in user space (FUSE) kernel.

9. The electronic device of claim 1, wherein the metadata stored in the first memory area includes information indicating a physical address where a file is stored in the second memory.

10. An electronic device comprising:
a processor;
a volatile first memory connected to the processor; and
a non-volatile second memory connected to the processor,
wherein a first file manager and a second file manager are loadable from the second memory into a first memory area of the first memory and executed by the processor,
an application is loaded from the second memory into a second memory area of the first memory and executed by the processor, and
the second memory area stores instructions that cause, when executed by the processor, the electronic device to:
receive a request message requesting metadata describing files from the first file manager, and
deliver the request message to the second file manager so that metadata stored in the second memory is loaded into the first memory area of the first memory.

11. The electronic device of claim 10, wherein the metadata loaded into the first memory area of the first memory includes information indicating a physical address where a file is stored in the second memory.

12. A method for operating an electronic device, the method comprising:
based at least on a request for directory data by a first application, reading the directory data from a non-volatile memory of the electronic device through a file manager, returning the directory data to the first application, and requesting a second application to store metadata describing files belonging to a directory corresponding to the directory data in a volatile memory; and
based on a request for file data by the first application, reading the file data from the non-volatile memory by using the metadata stored in the volatile memory and returning the file data to the first application.

13. The method of claim 12, wherein returning the file data includes:
further based on completion of storing the metadata in the volatile memory, reading the file data from the non-volatile memory by using the metadata stored in the volatile memory and returning the file data to the first application.

14. The method of claim 12, wherein requesting the second application including:
further based on the first application being an application designated to have authority to access a file storage of the second memory through the file manager without involvement of the second application, requesting the second application to store the metadata in the volatile memory.

15. The method of claim 14, wherein the designated application includes an application configured to manage the file storage and an application involved in creation of files in the directory.

16. The method of claim 12, wherein returning the directory data includes:
returning names of files belonging to the directory to the first application.

17. A recording medium storing instructions readable by a processor of an electronic device, the instructions, when executed by said processor, causing the electronic device to:
based at least on a request for directory data by a first application, read the directory data from a non-volatile memory of the electronic device through a file manager, returning the directory data to the first application, and request a second application to store metadata describing files belonging to a directory corresponding to the directory data in a volatile memory; and
based on a request for file data by the first application, read the file data from the non-volatile memory by using the metadata stored in the volatile memory and returning the file data to the first application.
